# FASCICULE DE BREVET EUROPEEN

(11) **EP 3 792 182 B1**
(45) Date de publication et mention de la délivrance du brevet: **01.12.2021**
(21) Numéro de dépôt: 20195567.1
(22) Date de dépôt: 10.09.2020
(51) Int. Cl.: B64D 27/26

(54) **ENSEMBLE DE MOTORISATION D'AÉRONEF COMPRENANT UN DISPOSITIF DE REPRISE D'EFFORTS DE POUSSÉE**
FLUGZEUGTRIEBWERKSANORDNUNG MIT EINER SCHUBKRAFTAUFNAHMEVORRICHTUNG
AIRCRAFT ENGINE ARRANGEMENT WITH A THRUST RECEIVING DEVICE

(30) Priorité: 11.09.2019 FR 1910025
(43) Date de publication de la demande: 17.03.2021
(73) Titulaire: AIRBUS OPERATIONS (S.A.S.), 31060 Toulouse (FR)
(72) Inventeur: BERJOT, Michael, 31060 Toulouse Cedex 9 (FR); DUBOIS, Olivier, 31060 Toulouse Cedex 9 (FR); HEUSBOURG, Melina, 31060 Toulouse Cedex 9 (FR)
(74) Mandataire: Sarraméa, Claude

(56) Documents cités:
- FR-A1- 2 915 177
- FR-A1- 2 969 578
- US-A1- 2012 080 554

## Description

La présente demande se rapporte à un ensemble de motorisation d'aéronef comprenant un dispositif de reprise d'efforts de poussée générés par un moteur suspendu et fixé de manière classique à un mât au moyen d'attaches moteur.

En référence avec la figure 1, on connait du document FR2915177, un ensemble de motorisation qui comprend à l'avant, en prenant en compte le sens de déplacement de l'aéronef, une attache moteur avant, à l'arrière, une attache moteur arrière, et entre les deux attaches, un dispositif de reprise d'efforts de poussée 100. Le dispositif de reprise d'efforts de poussée 100 comprend deux bielles de reprise de poussée 101,102 (thrust link en anglais) disposées de part et d'autre d'un plan vertical V de l'ensemble de motorisation et qui ont chacune une extrémité avant attachée au moteur et une extrémité arrière attachée à une ferrure principale 105 au travers d'un palonnier 120 articulé à la ferrure principale 105 par une liaison pivot d'axe R orthogonal à un plan moyen de transmission des efforts P, c'est-à-dire que l'axe R est orienté sensiblement verticalement.

Le dispositif de reprise d'efforts de poussée 100 comprend également deux ferrures latérales 113,114 reparties de part et d'autre de la ferrure principale 105.

L'extrémité arrière de chaque bielle 101,102 est reliée d'une part, par une première liaison mécanique au palonnier 120 et d'autre part par une seconde liaison mécanique à une ferrure latérale 113,114, les premières et seconde liaisons mécaniques comprenant chacune un axe orthogonal au plan moyen de transmission des efforts P. Les premières liaisons mécaniques sont des liaisons rotule ajustée (sans jeu) alors que les secondes liaisons mécaniques sont des liaisons rotules avec jeu, de sorte que ces dernières ne sont engagées qu'en cas de défaillance du palonnier 120 ou de l'une des premières liaisons mécaniques.

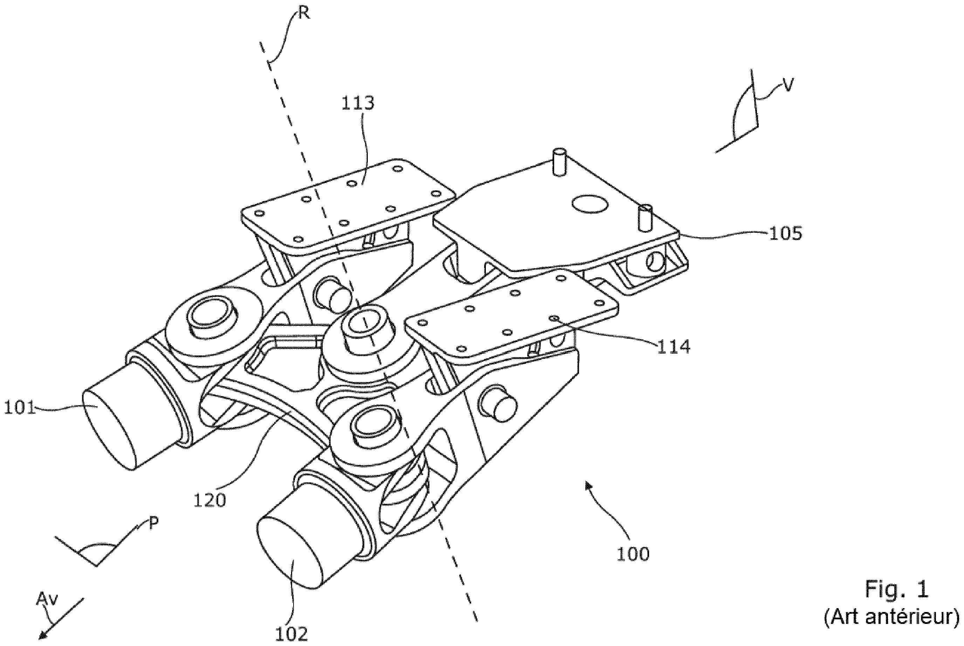

L'installation de moteurs de grandes dimensions sous voilure oblige les concepteurs à minimiser l'espace entre le mât et le moteur afin de maintenir une garde au sol entre la nacelle et le sol qui est suffisante pour permettre à des opérateurs d'accéder au-dessous du moteur. Or, dans le cas d'une architecture de dispositif de reprise d'efforts de poussée telle que décrite ci-dessus en relation avec la figure 1, l'accès aux liaisons entre les bielles et le palonnier/ ferrures latérales se fait par le dessus et est par conséquent d'autant plus aisé que l'espace entre le moteur et le mât est important.

Une forte réduction de l'espace entre le mât et le moteur rendrait difficiles les opérations des techniciens comme le montage/démontage des bielles.

Par conséquent, il existe un besoin d'améliorer la configuration du dispositif de reprise d'efforts de poussée pour une application à des moteurs de grandes dimensions dont les contraintes d'installation imposent de prévoir un espace réduit entre le mât et le moteur.

La présente invention vise à répondre en tout ou partie à ce besoin. A cet effet, l'invention a pour objet un ensemble de motorisation tel que revendiqué dans la revendication 1. Le document FR2969578 décrit le préambule de la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- la figure 1 est une vue éclatée et en perspective d'un dispositif de reprise d'efforts de poussée selon l'art antérieur ;
- la figure 2 est une vue schémâtique selon une coupe longitudinale d'un ensemble de motorisation attaché à une aile d'un aéronef selon l'invention ;
- la figure 3 est une vue en perspective à plus grande échelle de la zone Z de la figure 2, illustrant un dispositif de reprise d'efforts de poussée selon un mode de réalisation de l'invention ;
- la figure 4 est une vue éclatée et en perspective du dispositif de reprise d'efforts de poussée de la figure 3 ;
- la figure 5 est une vue de côté du dispositif de reprise d'efforts de poussée de la figure 3 ;
- la figure 6 est une vue en coupe selon la ligne A-A de la Fig. 5 ;
- la figure 7 est une vue de dessus du dispositif de reprise d'efforts de poussée de la figure 3 illustrant un chemin principal d'effort dans un cas de fonctionnement nominal du dispositif de reprise d'efforts de poussée ;
- la figure 8 est vue similaire à la figure 7 illustrant un chemin secondaire d'effort activé dans un premier cas de défaillance du dispositif de reprise d'efforts de poussée ;
- la figure 9 est vue similaire à la figure 7 illustrant un autre chemin secondaire d'effort activé dans un second cas de défaillance du dispositif de reprise d'efforts de poussée.

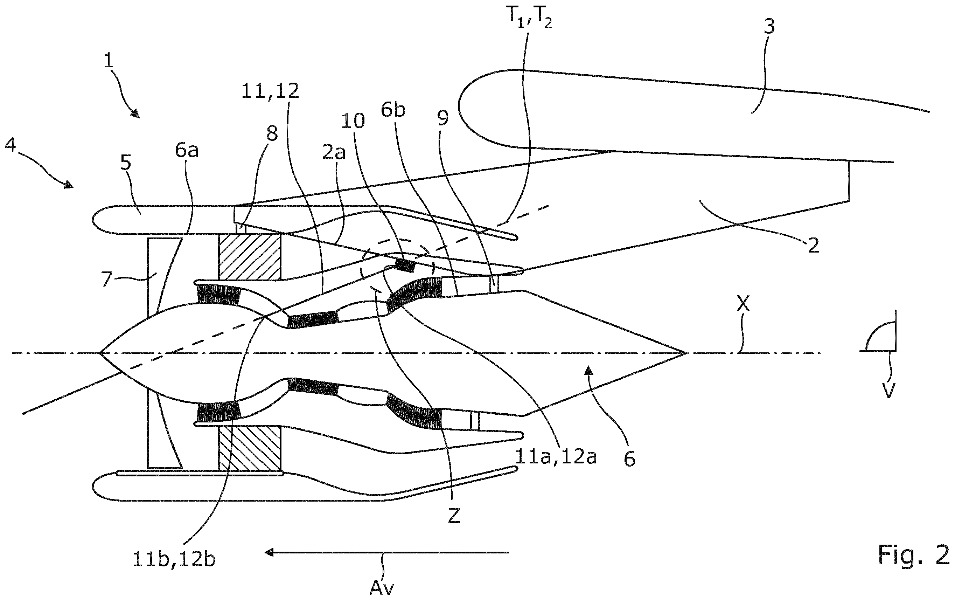

En relation avec la figure 2, un ensemble de motorisation 1 comporte un mât 2 fixé sous l'aile 3 d'un aéronef et une turbomachine 4 comportant une nacelle 5 de forme cylindrique s'étendant autour d'un axe longitudinal X et qui entoure un moteur 6 suspendu au mât 2 et sa soufflante 7.

Dans la description, les termes relatifs à une position sont pris en référence par rapport à la flèche Av représentant la direction d'avancement de l'ensemble de motorisation-aile dans l'air sous l'effet de la poussée fournie par le moteur 6. On appelle plan vertical V, le plan parallèle à l'axe longitudinal X, orthogonal au sol (c'est-à-dire à l'horizontale) et qui divise l'ensemble de motorisation 1 en deux parties symétriques gauche et droite.

Le mât 2 présente une face inférieure 2a qui est plane et orientée vers le sol.

La fixation du moteur 6 au mât est assurée par un ensemble d'attaches moteur comprenant à l'avant, une attache moteur avant 8, à l'arrière, une attache moteur arrière 9, et entre les attaches moteur avant 8 et arrière 9, un dispositif de reprise d'effort de poussée 10.

Dans le mode de réalisation de l'invention présenté sur la figure 2, l'attache moteur avant 8 se fixe entre la face inférieure 2a du mât et un carter de soufflante 6a du moteur qui entoure la soufflante 7 et l'attache moteur arrière 9 se fixe entre la face inférieure du mât 2a et un carter arrière 6b du moteur. D'autres agencements sont également possibles. Les attaches moteur avant et arrière 8,9 ne seront pas décrites plus en détail car elles peuvent prendre tous les modes de réalisation connus de l'homme du métier.

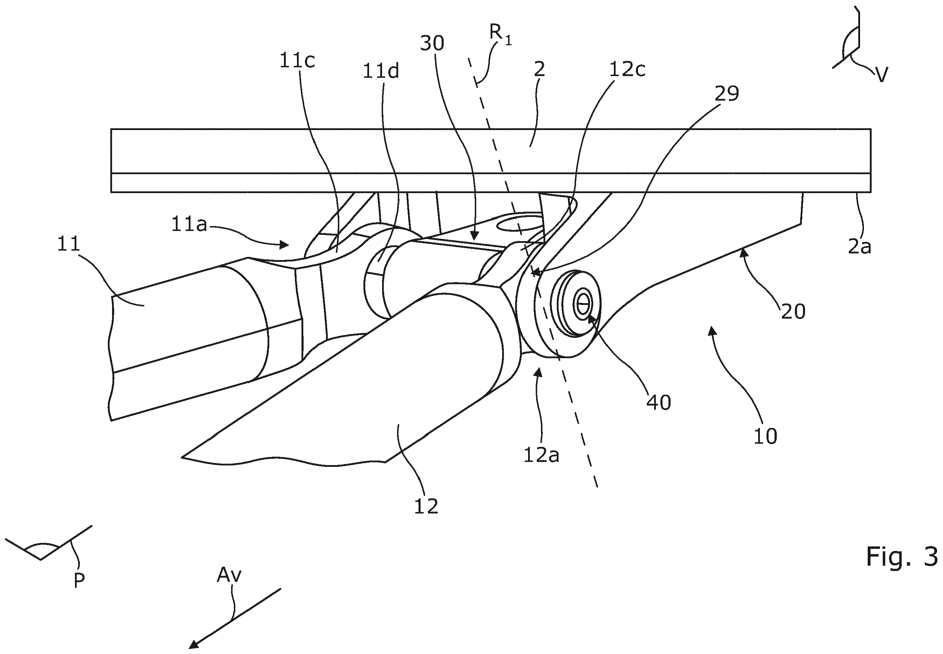

En référence avec les figures 3 à 6, le dispositif de reprise d'effort de poussée 10 comporte une ferrure principale 20, un palonnier 30 articulé à la ferrure principale 20 et des bielles de reprise des efforts de poussées du moteur disposées de part et d'autre du plan vertical V et ayant chacune une extrémité avant 11b,12b articulée au moteur 6 et une extrémité arrière 11a,12a articulée à la ferrure principale 20 par l'intermédiaire du palonnier 30.

Chaque bielle 11,12 s'étend longitudinalement selon un axe T1,T2, dit axe de transmission d'efforts, incliné par rapport à l'horizontale, et les deux bielles 11,12 se rapprochent l'une de l'autre dans une direction allant du moteur 6 vers le dispositif de reprise d'effort de poussée 10. Le plan contenant les deux axes de transmission d'efforts T1,T2 est appelé le plan moyen de transmission des efforts de poussée P.

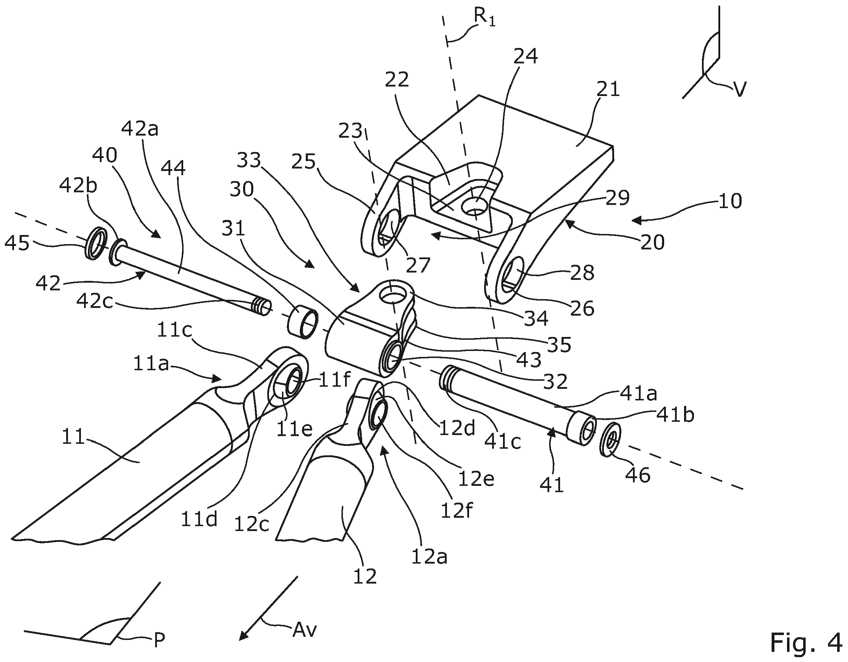

Telle qu'illustré à la figure 4, l'extrémité arrière 11a,12a de chaque bielle 11,12 comprend une âme 11c, 12c présentant un orifice traversant 11d,12d dans lequel est insérée une bague rotulée 11e,12e muni d'un alésage 11f, 12f.

La ferrure principale 20 est fixée à la face inférieure du mât 2a et le palonnier 30 est monté pivotant sur la ferrure principale 20 selon un axe de rotation R1 orthogonal au plan moyen de transmission des efforts P et compris dans le plan vertical V, c'est à dire sensiblement vertical.

Selon l'invention, les bielles sont fixées au palonnier 30 par un système d'axes 40 comprenant au moins un axe de liaison principal 41 disposé dans le plan moyen de transmission des efforts P et orthogonal à l'axe de rotation R1. L'axe de liaison principal 41 est insérée au travers de la bague rotulée 11e, 12e de chaque bielle 11,12 et relie mécaniquement d'une part, sans jeu, les bielles au palonnier 30, et d'autre part, avec jeu, les bielles à la ferrure principale 20 au niveau (par l'intermédiaire) de deux branches 25,26 de ladite ferrure 20 réparties symétriquement de part et d'autre du plan vertical V.

L'axe de liaison principal 41 est ainsi monté à l'horizontal. Une installation des bielles de poussée 11,12 par un axe de liaison monté à l'horizontale permet d'augmenter significativement l'accès aux liaisons entre le palonnier 30 et les bielles 11,12 contrairement à une installation par des axes montés à la verticale.

Dans le détail, la ferrure principale 20 comprend une semelle plane 21 prévue pour être plaquée contre la face inférieure 2a du mât. La fixation de la ferrure principale 20 au mât 2 s'effectue, par exemple, par l'utilisation de quatre vis de traction (non représentées) à travers des alésages (non représentés) traversant prévus à cet effet dans la semelle 21, avec deux alésages de chaque côté du plan vertical V plan médian de la ferrure principale 20 qui divise cette dernière en deux parties symétriques gauche et droite. Lorsque l'ensemble de motorisation 1 est opérationnel, c'est-à-dire que tous ses composants sont installés, le plan médian de la ferrure principale 20 est confondu avec le plan vertical V.

Un évidemment 22 est pratiqué à l'avant de la semelle 21 pour former une bride centrale 23 dans laquelle est pratiquée un alésage traversant 24 dont l'axe d'alésage est compris dans le plan médian de la ferrure principale 20. Lorsque l'ensemble de motorisation 1 est opérationnel, l'axe d'alésage est orthogonal au plan moyen de transmission des efforts P et compris dans le plan vertical V, c'est à dire sensiblement vertical.

Les deux branches 25, 26 sont reparties de part et d'autre de la bride centrale 23 symétriquement par rapport au plan médian de la ferrure principale 20 et forment ainsi une chape 29. Chacune des deux branches 25,26 comprend une lumière 27,28 de forme ovale, c'est-à-dire plus longue que large. Dans l'exemple des figures 3 à 5, chaque lumière 27,28 a une forme oblongue. Les lumières 27,28 des deux branches 25,26 sont symétriques l'une de l'autre par rapport au plan médian de la ferrure principale 20.

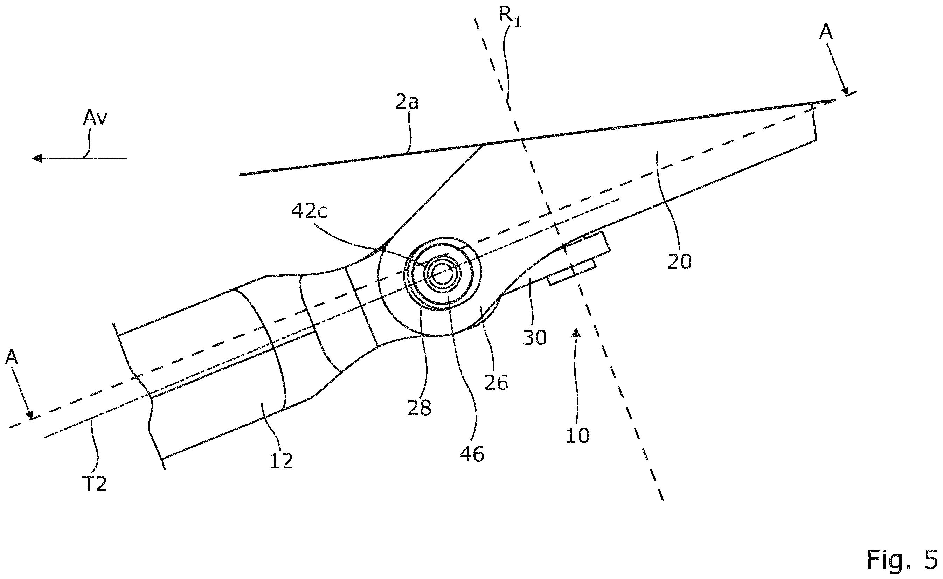

Les lumières 27,28 sont conformés de telles sorte que lorsque l'ensemble de motorisation 1 est opérationnel, chaque lumière 27,28 a sa plus grande dimension selon un axe compris dans le plan moyen de transmission des efforts P, comme plus particulièrement visible à la figure 5.

Le palonnier 30 comprend d'avant en arrière selon son axe longitudinal, un palier 31 avec un alésage 32 puis une chape 33 formée de deux branches 34,35 espacées l'une de l'autre. Chacune des deux branches 34,35 comprend un trou de passage 36,37 identique au trou de passage de l'autre branche. Les deux trous de passages 36,37 ont un même axe qui est orthogonal à l'axe de l'alésage du palier 31 du palonnier 30.

La chape 33 du palonnier 30 est conformée pour être arrangée dans l'évidement 22 pratiqué sur la ferrure principale 20 afin d'enserrer la bride centrale 30, avec une branche 34,35 de chaque côté de la bride centrale 23. On notera que sur les exemples des figures 3 à 9, l'évidement 22 a une forme triangulaire complémentaire de celle des branches 34,35 de la chape du palonnier 30.

En position opérationnelle, le palonnier 30 est monté mobile en rotation, sur la bride centrale 23 par une liaison pivot ajustée d'axe de rotation R1. La liaison pivot comprend, par exemple, un axe emmanché dans un palier inséré avec un ajustement serré dans l'alésage traversant 24 de la bride centrale 23 et monté sur la chape 33 du palonnier 30 par insertion dans chacun des deux trous de passages 36,37des branches 34,35.

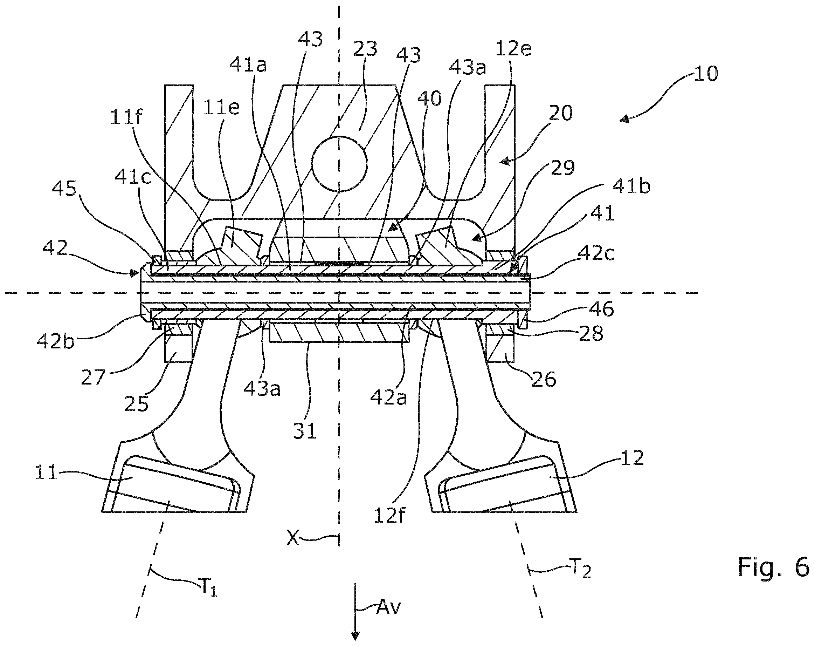

En référence avec la figure 6, le système d'axe 40 comprend un axe de liaison principal 41 doublé par un axe de liaison secondaire 42 inséré dans l'axe de liaison principal 41, deux manchons 43, une bague de blocage 44 et deux écrous de serrage 45,46.

Les deux écrous de serrage 45,46 ont des diamètres externes tels qu'ils ne peuvent être insérés au travers des lumières 27,28 des branches 25,26 de la ferrure principale 20 et permettent de maintenir les axes de liaisons solidaires l'un de l'autre et de maintenir les axes de liaisons en place une fois ces derniers installés pour assurer la fixation des bielles 11,12 à la ferrure principale 20.

L'axe de liaison principal 41 comme l'axe de liaison secondaire 42 se présente sous la forme d'un cylindre creux. Chacun des deux axes de liaison 41,42 a une longueur supérieure à la plus petite longueur entre les faces externes des branches 25,26 de la chape de la ferrure principale 20, et l'axe de liaison secondaire 42 a une longueur supérieure à celle de l'axe principal 41.

Chacun des axes de liaison 41,42 comprend une tige 41a, 42a et une tête 41b,42b arrangée à une première extrémité de la tige 41a, 42a. La seconde extrémité de la tige 41a, 42a comprend une portion filetée 41c,42c.

Le plus grand diamètre externe de l'axe de liaison principal 41 est inférieur à la plus petite dimension de la lumière 27,28 de chacune des branches 25,26 de la ferrure principale 20, de sorte que la tête 41b de l'axe de liaison principal 41 peut être insérée au travers des branches 25,26 de la ferrure principale 20.

La tête 42b de l'axe de liaison secondaire 42 présente un diamètre externe égal ou supérieur au diamètre externe de la tige 41a de l'axe de liaison principal 41.

Les manchons 43 sont insérés en force de chaque côté de l'alésage 35 du palier 31 du palonnier 30. Chaque manchon 43 comprend un fût lisse cylindrique dont une surface externe prend appui contre l'alésage 35 du palier 31 du palonnier 30. Chaque manchon 43 est en outre équipé d'une butée 43a qui prend appui contre la face du palier 31 du palonnier 30 par laquelle le manchon 43 est inséré

La bague de blocage 44, de forme cylindrique, a une hauteur similaire à celle de la hauteur de la tête 41b de l'axe de liaison principal 41 (la hauteur d'un élément est définie ici comme la dimension de l'élément mesurée selon son axe longitudinal). Cette hauteur est supérieure à l'épaisseur de chacune des branches 25,26 de la ferrure principale 20. En outre, la bague de blocage 44 a un diamètre externe identique à celui de la tête 41b de l'axe de liaison principal 41. Ce diamètre externe est supérieur à celui de l'alésage 11f, 12f des bagues rotulées 11e,12e des bielles 11,12.

L'axe de liaison principal 41 est inséré, son extrémité comprenant la portion filetée 41c en premier, au niveau d'un premier côté du dispositif de reprise d'efforts de poussée 10 et traverse, dans l'ordre : une lumière 28 d'une première branche 26 de la ferrure principal 20, l'alésage 12f de la bague rotulée 12e d'une première bielle 12, les manchons 43 insérés dans le palier 31 du palonnier 30, l'alésage 11f de la bague rotulée 11e d'une seconde bielle 11, puis la bague de blocage 44 arrangée dans la lumière 27 de la seconde branche 26 de la ferrure principale 20. Le diamètre externe de la tige 41a l'axe de liaison principal 41 est tel que ce dernier est emmanché sans jeu dans les manchons 43 (liaison pivot ajusté) et dans les bagues rotulées 11e, 12e des bielles (liaison rotule ajustée) 11,12.

L'axe de liaison secondaire 42 est inséré dans l'axe de liaison principal 41, son extrémité comprenant la portion filetée 42c en premier, au niveau d'un second côté du dispositif de reprise d'efforts de poussée 10. La tête 42b de l'axe de liaison secondaire 42 vient en butée contre la seconde extrémité de la tige 41a de l'axe de liaison principal 41 et la seconde extrémité de la tige 42a de l'axe de liaison secondaire 42 comportant l'extrémité filetée 42c dépasse de la tête 41b de l'axe principal 41.

Le premier écrou de serrage 45 est arrangé, à l'extérieur de la chape 29, entre la tête 42b de l'axe de liaison secondaire 42 et la bague de blocage 44, et est vissé sur la portion filetée 41c de l'axe de liaison principal 41 jusqu'à prendre appui contre la bague de blocage 44. L'axe de liaison principal 41, dont la tête 41b est arrangée dans la lumière 28 de la première branche 26 de la ferrure principale 20, est alors bloqué en translation selon une première direction.

Le second écrou de serrage 46 est arrangé à l'extérieur de la chape 29 et vissé sur la portion filetée 42c de la tige 42a de l'axe de liaison secondaire 42 jusqu'à prendre appui sur la tête 41b de l'axe de liaison principal 41. L'axe de liaison principal 41 et ainsi bloqué en translation selon une seconde direction opposée à la première direction.

Le second écrou de serrage 46 permet de solidariser les deux axes de liaisons 41,42 ensembles.

Le premier et le second écrou de serrage 45,46 sont vissés et serrés avec un couple suffisant pour immobiliser en translation les bagues rotulées 11e,12e des bielles 11,12. Ainsi, lorsque les écrous 45,46 sont serrés, une bielle 11 est bloquée en translation par, d'un côté, la bague de blocage 44 et, de l'autre côté, par un manchon 43. Une autre bielle 12 est bloquée en translation d'un côté par la tête 41b de l'axe de liaison principal 41 et de l'autre côté par un manchon 43.

Ainsi via le système d'axes de liaison 40, chaque bielle 11,12 est d'une part liée mécaniquement sans jeu au palonnier 30 et d'autre part liée mécaniquement avec jeu directement à la ferrure principale 20.

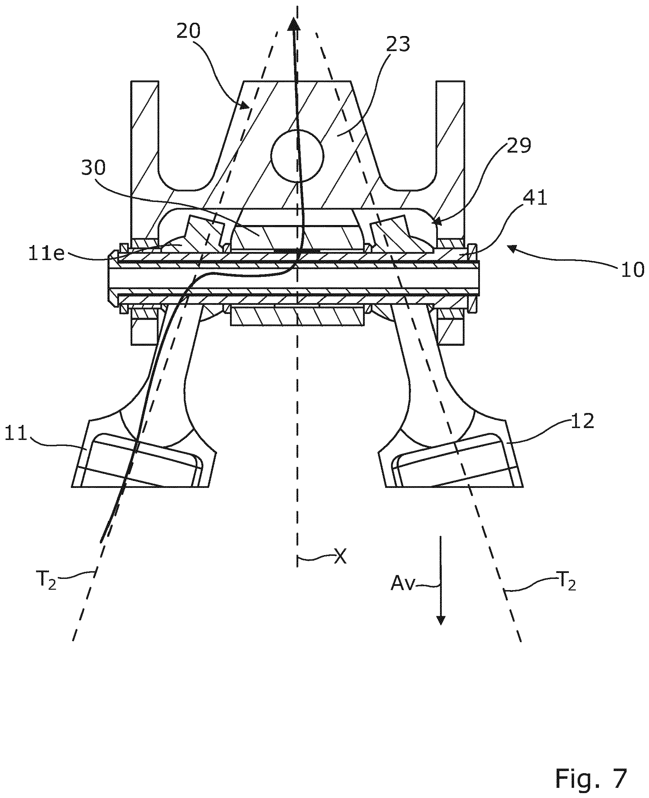

En relation avec les figures 7 à 9, la conception du dispositif de reprise d'efforts de poussée 10, répond aux exigences aéronautiques de doublement des chemins d'efforts en cas de défaillance d'un de ses éléments.

En effet, en cas de fonctionnement nominal du dispositif de reprise d'efforts de poussée 10 (figure 7), il y a un jeu entre l'axe de liaison principal 41 et la ferrure principale 20. L'axe de liaison principal 41 peut pivoter dans le plan moyen de transmission des efforts P dans la limite de la longueur des lumières 27,28. Le palonnier 30 est par conséquent libre de pivoter dans le plan moyen de transmission des efforts P pour reprendre les efforts du moteur 6 transmis par les bielles 11,12.

Dans ce cas le chemin d'effort, dit chemin principal d'effort, passe successivement de la bielle 11, au palonnier 30, puis à la ferrure principale 20 et enfin au mât 2. Le passage entre la bielle 11 et le palonnier 30 s'effectue à travers la liaison rotule ajusté entre l'axe de liaison principal 41 et la bielle 11. Le passage entre le palonnier 30 et la ferrure principale 20 s'effectue à travers la liaison pivot ajustée d'axe R1. Sur la figure 7, la ligne montre le chemin principal d'effort pour la bielle tribord 11. Le chemin principal d'effort pour la bielle bâbord 12 est symétrique.

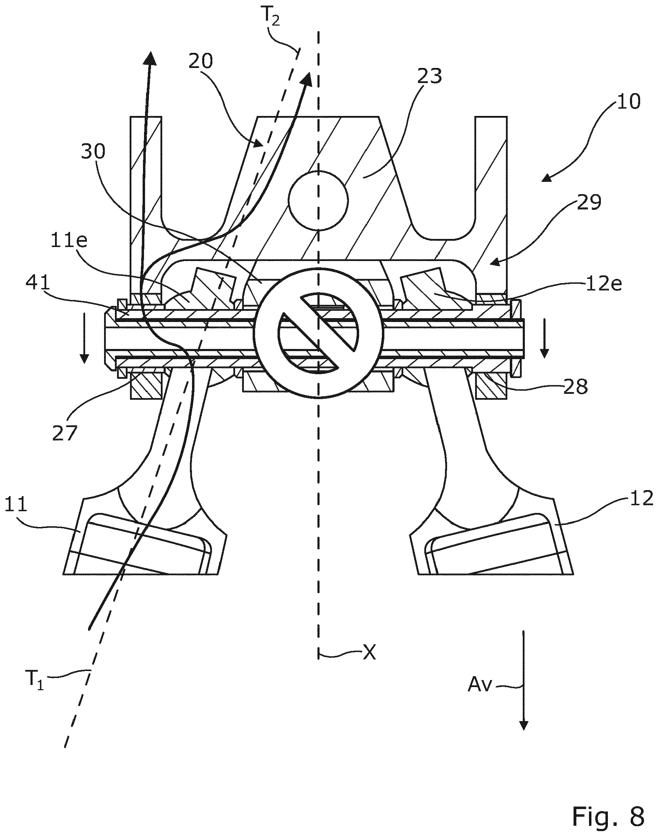

En cas de rupture de l'axe palonnier (figure 8), c'est-à-dire dans le cas où le palonnier 30 n'est plus solidarisé à la ferrure principale 20, le moteur 6 va se déplacer sous l'effet de son poids ce qui va provoquer un glissement de l'axe de liaison principal 41 vers l'avant et suivant le plan moyen de transmission des efforts P dans chacune des lumières 27,28 jusqu'à un effacement du jeu entre l'axe de liaison principal 41 et les branches 25,26 de la ferrure principale (le déplacement de l'axe de liaison principal 41 est matérialisé par des flèches sur la figure 8). Le palonnier 30 est par conséquent bloqué en rotation et les efforts du moteur 6 sont alors repris directement par la ferrure principal 20.

Dans ce cas le chemin d'effort, dit premier chemin secondaire d'effort, passe successivement de la bielle 11 à la ferrure principale 20 et enfin au mât 2. Le passage entre la bielle et la ferrure principale 20 s'effectue à travers la liaison rotule ajustée entre l'axe de liaison principal 41 et la bielle 11. Sur la figure 8, la ligne montre le premier chemin secondaire d'effort pour un cas de rupture de l'axe palonnier pour la tribord 11. Le premier chemin secondaire d'effort est symétrique pour la bielle bâbord 12.

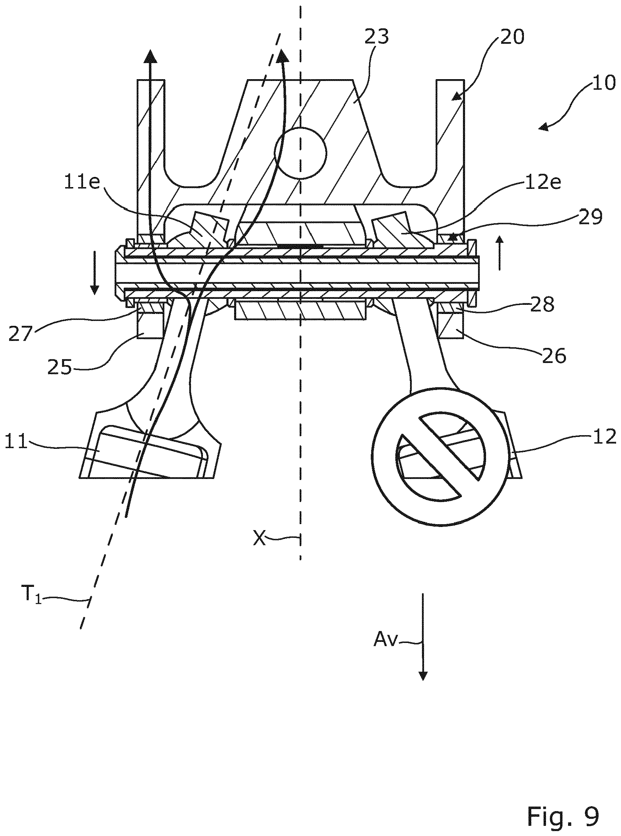

En cas de rupture d'une des bielles 11,12 d'un côté du plan vertical V (figure 9), le palonnier 30 n'est plus équilibré ce qui va provoquer une rotation de l'axe de liaison principal 41. Du côté du plan vertical V sur lequel la bielle 12 est rompue, l'axe de liaison principal 41 va se déplacer en arrière dans la lumière 28, suivant le plan moyen de transmission des efforts P, jusqu'à un effacement du jeu entre l'axe de liaison principal 41 et la branche 26 tandis que de l'autre côté du plan vertical V, l'axe de liaison principal 41 va se déplacer vers l'avant suivant le plan moyen de transmission des efforts P dans la lumière 27 jusqu'à un effacement du jeu entre l'axe de liaison principal 41 et la branche 25. Les efforts du moteur 6 sont alors repris par la ferrure principale 20

Dans ce cas le chemin d'effort, dit second chemin secondaire d'effort, passe successivement de la bielle d 11 intègre à la ferrure principal 20 puis enfin au mât 2. Le passage entre la bielle 11 intègre vers la ferrure principale 20 s'effectue au travers de la liaison rotule ajustée. Sur la figure 9, la ligne montre le second chemin secondaire d'effort pour un cas de rupture de la bielle bâbord 12. Le second chemin secondaire d'effort serait symétrique pour la bielle bâbord 12 en cas de rupture de la bielle tribord 11.

Enfin, grâce à la conception du système d'axes de liaison 40, les bielles 11,12 sont toujours bloquées en translation par rapport au palonnier 30 puisque, en cas de rupture de l'axe de liaison principal 41, l'axe de liaison secondaire 42 est sollicité.

La conception du dispositif de reprise d'efforts de poussée 10 selon l'invention présente différents avantages. Le montage des bielles 11,12 par des axes de liaison 41, 42 montés à l'horizontale permet d'optimiser la compacité du palonnier par rapport à l'état de la technique qui nécessite une installation des bielles 11, 12 par des axes de liaisons montés à la verticale. En effet, pour une installation avec des axes verticaux, la hauteur du palonnier est contrainte par la longueur nécessaire pour dégager l'axe verticalement ou par des outillages nécessaires à installer entre le mât 2 et le palonnier 30.

En outre la conception du système d'axes de liaison 40 facilite et accélère les opérations d'inspections de l'intégrité de l'axe de liaison principal 41. En effet, un démontage de l'axe de liaison secondaire 42 permet une inspection au boroscope de l'intérieur de l'axe de liaison principal 41, sans avoir à désolidariser les bielles 11,12 du palonnier 30.

On notera que sur l'exemple de la figure 2, le dispositif de reprise d'efforts de poussée 10 est distinct de l'attache moteur arrière 9. Cette configuration permet de simplifier l'attache moteur arrière 9 par rapport à une attache moteur arrière de l'état de la technique qui reprend également les bielles, et ainsi obtenir une attache moteur arrière 9 compacte et des lignes aérodynamiques étroites à l'arrière du mât 2 et donc d'améliorer la performance aérodynamique de l'ensemble de motorisation 1.

Une autre configuration est possible, sans sortir du cadre de la présente invention, dans laquelle la ferrure principale 20 est solidaire de l'attache moteur arrière 9.

## Revendications

1. Ensemble de motorisation (1) comprenant un mât (2) ayant une face inférieure (2a) et un moteur (6) entouré par une nacelle (5) ayant un axe longitudinal (X), un plan vertical (V) parallèle à l'axe longitudinal (X) séparant l'ensemble de motorisation (1) en deux parties symétriques gauche et droite, le moteur (6) étant suspendu au mât (2) par une attache moteur avant (8), à l'avant du moteur, une attache moteur arrière (9) à l'arrière du moteur, et un dispositif de reprise d'efforts de poussée (10) disposé entre l'attache moteur arrière (9) et l'attache moteur avant (8) et comprenant deux bielles (11,12) disposées de part et d'autre du plan vertical (V) et ayant chacune une extrémité avant (11b,12b) articulée au moteur (6) et une extrémité arrière (11a,12a) articulée à une ferrure principale (20) par l'intermédiaire d'un palonnier (30) monté pivotant sur la ferrure principale (20) selon un axe de rotation (R1) orthogonal à un plan moyen de transmission des efforts de poussée (P) et disposé dans le plan vertical (V) et l'extrémité arrière (11a,12a) de chaque bielle (11,12) comprenant une bague rotulée (11e, 12e) dans laquelle est insérée un axe de liaison principal (41) disposé dans le plan moyen de transmission des efforts de poussée (P) et orthogonal à l'axe de rotation (R1), ledit axe de liaison principal (41) reliant mécaniquement d'une part, sans jeu mécanique, les bielles au palonnier (30), et d'autre part, avec jeu mécanique, les bielles à la ferrure principale (20) par l'intermédiaire de deux branches (25,26) réparties symétriquement de part et d'autre du plan vertical (V).

2. Ensemble de motorisation (1) selon la revendication 1, **caractérisé en ce que** de chaque côté du plan vertical (V), une bielle (11,12) est arrangée entre le palonnier (30) et une branche (25,26) de la ferrure principale (20).

3. Ensemble de motorisation (1) selon l'une quelconque des revendications 1 à 2, **caractérisé en ce que** la ferrure principale (20) comprend une semelle (21) fixée à la face inférieure (2a) du mât et **en ce qu'**un alésage traversant (24) est pratiqué sur la semelle (21), l'axe d'alésage de l'alésage traversant (24) est disposé dans le plan vertical (V) et orthogonalement au plan moyen de transmission des efforts de poussée (P).

4. Ensemble de motorisation (1) selon la revendication 3, caractérisé en ce l'alésage traversant (24) est pratiqué sur un évidement (22) réalisé à l'avant de la semelle (21).

5. Ensemble de motorisation (1) selon l'une quelconque des revendications 3 à 4, **caractérisé en ce que** le palonnier (30) comprend une chape (33) avec deux branches (34,35) entre lesquelles est arrangée la ferrure principale (20), chaque branche (34, 35) étant munie d'un trou de passage (36,37), les deux trous de passages ayant un même axe, et **en ce que** le palonnier (30) comprend en outre un palier (31) dans lequel est emmanché sans jeu l'axe de liaison principal (41), l'alésage du palier (31) ayant un axe orthogonal à l'axe des trous de passages (36,37) des deux branches (34,35).

6. Ensemble de motorisation (1) selon l'une quelconque des revendications 1 à 5 **caractérisée en ce que** chaque branche (25,26) de la ferrure principale (20) comprend une lumière (27,28) de forme ovale, chaque lumière (27,28) présentant sa plus grande dimension dans le plan moyen de transmission des efforts (P), et **en ce que** l'axe de liaison principal (41) est inséré dans chacune des deux lumières (27,28).

7. Ensemble de motorisation (1) selon l'une quelconque des revendications 1 à 6, **caractérisée en ce que** l'axe de liaison principal (41) se présente sous la forme d'un axe cylindrique creux et **en ce qu'**un axe de liaison secondaire (42) est inséré dans l'axe de liaison principal (41).

8. Ensemble de motorisation (1) selon la revendication 7, **caractérisée en ce que** l'axe de liaison secondaire (42) se présente sous la forme d'un axe cylindrique creux.

9. Ensemble de motorisation (1) selon la revendication 7, **caractérisée en ce que** chacun des axes de liaison (41,42) comprend une tige (41a,42a), une tête (41b,42b) arrangée à une première extrémité de la tige et une portion filetée (41c,42c) à une seconde extrémité de la tige, et **en ce que** la tête (42b) de l'axe de liaison secondaire (42) vient en butée contre la seconde extrémité de la tige (41a) de l'axe de liaison principal (41), la seconde extrémité de la tige (42a) de l'axe de liaison secondaire (42) dépasse de la tête (41b) de l'axe de liaison principal (41), l'axe de liaison principal (41) et l'axe de liaison secondaire (42) étant maintenus ensembles par un écrou de serrage (46) vissé sur la portion filetée (42c) de l'axe de liaison secondaire (42) et venant en appui contre la tête (41b) de l'axe de liaison principal (41) .

10. Ensemble de motorisation (1) selon l'une quelconque des revendications 1 à 9, **caractérisée en ce que** le dispositif de reprise d'efforts de poussée (10) et l'attache moteur arrière (9) sont distincts.

## Patentansprüche

1. Triebwerksanordnung (1), welche einen Pylon (2) mit einer Unterseite (2a) und ein Triebwerk (6), das von einer Gondel (5) mit einer Längsachse (X) umgeben ist, umfasst, wobei eine zur Längsachse (X) parallele vertikale Ebene (V) die Triebwerksanordnung (1) in zwei symmetrische Teile, einen rechten und einen linken, aufteilt, wobei das Triebwerk (6) am Pylon (2) mittels einer vorderen Triebwerksaufhängung (8) vorn am Triebwerk, einer hinteren Triebwerksaufhängung (9) hinten am Triebwerk und einer Schubkraftaufnahmevorrichtung (10) aufgehängt ist, die zwischen der hinteren Triebwerksaufhängung (9) und der vorderen Triebwerksaufhängung (8) angeordnet ist und zwei Stangen (11, 12) umfasst, die beiderseits der vertikalen Ebene (V) angeordnet sind und jeweils ein vorderes Ende (11b, 12b), das am Triebwerk (6) angelenkt ist, und ein hinteres Ende (11a, 12a) aufweisen, das an einem Hauptbeschlag (20) über eine Traverse (30) angelenkt ist, die an dem Hauptbeschlag (20) schwenkbar um eine Drehachse (R1) gelagert ist, die zu einer Mittelebene der Übertragung der Schubkräfte (P) orthogonal ist und in der vertikalen Ebene (V) angeordnet ist, und wobei das hintere Ende (11a, 12a) jeder Stange (11, 12) eine kugelgelenkig gelagerte Hülse (11e, 12e) umfasst, in welche eine Hauptverbindungsachse (41) eingesetzt ist, die in der Mittelebene der Übertragung der Schubkräfte (P) angeordnet und zu der Drehachse (R1) orthogonal ist, wobei die Hauptverbindungsachse (41) einerseits, ohne mechanisches Spiel, die Stangen mit der Traverse (30) mechanisch verbindet, und andererseits, mit mechanischem Spiel, die Stangen mit dem Hauptbeschlag (20) über zwei Schenkel (25, 26), die symmetrisch beiderseits der vertikalen Ebene (V) angeordnet sind.

2. Triebwerksanordnung (1) nach Anspruch 1, **dadurch gekennzeichnet, dass** auf jeder Seite der vertikalen Ebene (V) eine Stange (11, 12) zwischen der Traverse (30) und einem Schenkel (25, 26) des Hauptbeschlags (20) angeordnet ist.

3. Triebwerksanordnung (1) nach einem der Ansprüche 1 bis 2, **dadurch gekennzeichnet, dass** der Hauptbeschlag (20) eine Sohle (21) umfasst, die an der Unterseite (2a) des Pylons befestigt ist, und dadurch, dass eine Durchgangsbohrung (24) in der Sohle (21) ausgebildet ist, wobei die Bohrungsachse der Durchgangsbohrung (24) in der vertikalen Ebene (V) und orthogonal zur Mittelebene der Übertragung der Schubkräfte (P) angeordnet ist.

4. Triebwerksanordnung (1) nach Anspruch 3, **dadurch gekennzeichnet, dass** die Durchgangsbohrung (24) an einer Aussparung (22) ausgebildet ist, die vorn an der Sohle (21) hergestellt ist.

5. Triebwerksanordnung (1) nach einem der Ansprüche 3 bis 4, **dadurch gekennzeichnet, dass** die Traverse (30) ein Gabelstück (33) mit zwei Schenkeln (34, 35) umfasst, zwischen denen der Hauptbeschlag (20) angeordnet ist, wobei jeder Schenkel (34, 35) mit einem Durchgangsloch (36, 37) versehen ist, wobei die zwei Durchgangslöcher dieselbe Achse aufweisen, und dadurch, dass die Traverse (30) außerdem ein Lager (31) umfasst, in welches die Hauptverbindungsachse (41) spielfrei eingeschoben ist, wobei die Bohrung des Lagers (31) eine Achse aufweist, die zur Achse der Durchgangslöcher (36, 37) der zwei Schenkel (34, 35) orthogonal ist.

6. Triebwerksanordnung (1) nach einem der Ansprüche 1 bis 5, **dadurch gekennzeichnet, dass** jeder Schenkel (25, 26) des Hauptbeschlags (20) ein Langloch (27, 28) von ovaler Form umfasst, wobei jedes Langloch (27, 28) seine größere Abmessung in der Mittelebene der Übertragung der Schubkräfte (P) aufweist, und dadurch, dass die Hauptverbindungsachse (41) in jedes der zwei Langlöcher (27, 28) eingesetzt ist.

7. Triebwerksanordnung (1) nach einem der Ansprüche 1 bis 6, **dadurch gekennzeichnet, dass** die Hauptverbindungsachse (41) in der Form einer hohlen zylindrischen Achse vorliegt, und dadurch, dass eine sekundäre Verbindungsachse (42) in die Hauptverbindungsachse (41) eingesetzt ist.

8. Triebwerksanordnung (1) nach Anspruch 7, **dadurch gekennzeichnet, dass** sie sekundäre Verbindungsachse (42) in der Form einer hohlen zylindrischen Achse vorliegt.

9. Triebwerksanordnung (1) nach Anspruch 7, **dadurch gekennzeichnet, dass** jede der Verbindungsachsen (41, 42) einen Schaft (41a, 42a), einen Kopf (41b, 42b), der an einem ersten Ende des Schaftes angeordnet ist, und einen Gewindeabschnitt (41c, 42c) an einem zweiten Ende des Schaftes umfasst, und dadurch, dass der Kopf (42b) der sekundären Verbindungsachse (42) am zweiten Ende des Schaftes (41a) der Hauptverbindungsachse (41) zur Anlage kommt und das zweite Ende des Schaftes (42a) der sekundären Verbindungsachse (42) über den Kopf (41b) der Hauptverbindungsachse (41) hinausragt, wobei die Hauptverbindungsachse (41) und die sekundäre Verbindungsachse (42) durch eine Spannmutter (46) zusammengehalten werden, die auf den Gewindeabschnitt (42c) der sekundären Verbindungsachse (42) aufgeschraubt ist und am Kopf (41b) der Hauptverbindungsachse (41) zur Anlage kommt.

10. Triebwerksanordnung (1) nach einem der Ansprüche 1 bis 9, **dadurch gekennzeichnet, dass** die Schubkraftaufnahmevorrichtung (10) und die hintere Triebwerksaufhängung (9) verschieden sind.

## Claims

1. Propulsion assembly (1) comprising a pylon (2) having a lower face (2a) and an engine (6) surrounded by a nacelle (5) having a longitudinal axis (X), a vertical plane (V) parallel to the longitudinal axis (X) separating the propulsion assembly (1) into two symmetrical parts, left and right, the engine (6) being suspended from the pylon (2) by a front engine attachment (8), at the front of the engine, a rear engine attachment (9) at the rear of the engine, and a device for reacting thrust forces (10) disposed between the rear engine attachment (9) and the front engine attachment (8) and comprising two rods (11, 12) that are disposed on either side of the vertical plane (V) and each have a front end (11b, 12b) articulated to the engine (6) and a rear end (11a, 12a) articulated to a main fitting (20) via a spreader (30) mounted so as to be able to pivot on the main fitting (20) about an axis of rotation (R1) orthogonal to a mean plane for transmission of the thrust forces (P) and disposed in the vertical plane (V) and the rear end (11a, 12a) of each rod (11, 12) comprising a ball joint ring (11e, 12e) into which is inserted a main connection pin (41) that is disposed in the mean plane for transmission of the thrust forces (P) and orthogonal to the axis of rotation (R1), said main connection pin (41) mechanically connecting both, without mechanical clearance, the rods to the spreader (30) and, with mechanical clearance, the rods to the main fitting (20) via two arms (25, 26) distributed symmetrically on either side of the vertical plane (V).

2. Propulsion assembly (1) according to Claim 1, **characterized in that**, on each side of the vertical plane (V), a rod (11, 12) is arranged between the spreader (30) and an arm (25, 26) of the main fitting (20).

3. Propulsion assembly (1) according to either one of Claims 1 and 2, **characterized in that** the main fitting (20) comprises a sole (21) fastened to the lower face (2a) of the pylon and **in that** a through-bore (24) is made in the sole (21), the bore axis of the through-bore (24) is disposed in the vertical plane (V) and orthogonal to the mean plane for transmission of the thrust forces (P).

4. Propulsion assembly (1) according to Claim 3, **characterized in that** the through-bore (24) is made in a cutout (22) realized at the front of the sole (21).

5. Propulsion assembly (1) according to either one of Claims 3 and 4, **characterized in that** the spreader (30) comprises a clevis (33) with two arms (34, 35) between which the main fitting (20) is arranged, each arm (34, 35) being provided with a passage hole (36, 37), the two passage holes having a single axis, and **in that** the spreader (30) also comprises a bearing (31) in which the main connection pin (41) is fitted without clearance, the bore of the bearing (31) having an axis orthogonal to the axis of the passage holes (36, 37) of the two arms (34, 35) .

6. Propulsion assembly (1) according to any one of Claims 1 to 5, **characterized in that** each arm (25, 26) of the main fitting (20) comprises an aperture (27, 28) of oval shape, each aperture (27, 28) having its greatest dimension in the mean plane for transmission of the forces (P), and **in that** the main connection pin (41) is inserted into each of the two apertures (27, 28).

7. Propulsion assembly (1) according to any one of Claims 1 to 6, **characterized in that** the main connection pin (41) is in the form of a hollow cylindrical pin and **in that** a secondary connection pin (42) is inserted into the main connection pin (41).

8. Propulsion assembly (1) according to Claim 7, **characterized in that** the secondary connection pin (42) is in the form of a hollow cylindrical pin.

9. Propulsion assembly (1) according to Claim 7, **characterized in that** each of the connection pins (41, 42) comprises a shank (41a, 42a), a head (41b, 42b) arranged at a first end of the shank and a threaded portion (41c, 42c) at a second end of the shank, and **in that** the head (42b) of the secondary connection pin (42) butts against the second end of the shank (41a) of the main connection pin (41), the second end of the shank (42a) of the secondary connection pin (42) extends beyond the head (41b) of the main connection pin (41), the main connection pin (41) and the secondary connection pin (42) being held together by a clamping nut (46) that is screwed onto the threaded portion (42c) of the secondary connection pin (42) and bears against the head (41b) of the main connection pin (41).

10. Propulsion assembly (1) according to any one of Claims 1 to 9, **characterized in that** the device for reacting thrust forces (10) and the rear engine attachment (9) are separate.
